(19) Europäisches Patentamt
European Patent Office
Office européen des brevets

(11) **EP 2 028 574 B1**

(12) **FASCICULE DE BREVET EUROPEEN**

(45) Date de publication et mention
de la délivrance du brevet:
**03.07.2013 Bulletin 2013/27**

(51) Int Cl.:
***G05B 19/4067*** *(2006.01)*

(21) Numéro de dépôt: **08162837.2**

(22) Date de dépôt: **22.08.2008**

(54) **Procédé de fonctionnement d'un actionneur électromécanique pour la manoeuvre motorisée d'un écran et actionneur pour sa mise en oeuvre.**

Verfahren zum Betrieb eines elektro-mechanischen Aktuators für einen motorischen Antrieb einer Abtrennung und zugehöriger Aktuator

Method for operating an electromechanical actuator for a motorised screen drive and actuator therefore

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **23.08.2007 FR 0705982**

(43) Date de publication de la demande:
**25.02.2009 Bulletin 2009/09**

(73) Titulaire: **Somfy SAS**
**74300 Cluses (FR)**

(72) Inventeurs:
• **Cavarec, Pierre-Emmanuel**
**74300, MAGLAND (FR)**

• **Bruno, Serge**
**74460, MARNAZ (FR)**

(74) Mandataire: **Bugnion Genève**
**Bugnion S.A.**
**Conseils en Propriété Industrielle**
**Route de Florissant 10**
**Case Postale 375**
**1211 Genève 12 (CH)**

(56) Documents cités:
**EP-A- 0 229 681      EP-A- 0 479 525**
**EP-A- 1 445 417      US-B1- 6 924 730**

**Description**

L'invention concerne les actionneurs électromécaniques destinés à la motorisation du mouvement d'écran ou d'ouvrants, tels que des fenêtres, des volets, des stores ou des écrans de projection. Elle concerne en particulier les actionneurs comprenant une unité de commande électronique et un système de commande manuelle de secours.

De tels actionneurs comportent généralement un moteur et un réducteur placé sur un arbre de sortie du moteur, ainsi qu'une unité de commande permettant de piloter le moteur dans un sens de rotation ou l'autre. Dans le cas des moteurs dits tubulaires, destinés à être placés dans un tube d'enroulement autour duquel s'enroule l'écran manoeuvré, l'arbre de sortie du moteur entraîne en rotation le tube d'enroulement par l'intermédiaire d'une roue lors d'une commande.

L'actionneur est alimenté au moyen d'une source externe de courant. Au moins une partie de l'unité de commande est donc généralement alimentée en permanence par le secteur et est capable d'alimenter le moteur dans un sens ou dans l'autre selon la commande reçue. Cette commande peut être une commande filaire (un interrupteur placé sur les lignes de phase) ou une commande sans fil : l'actionneur dispose alors d'un élément de réception d'ordres sans fil.

L'unité de commande permet de commander le fonctionnement du moteur. En particulier, elle dispose de moyens de comptage de position. La position courante de l'écran correspond à un nombre de tour déterminé du tube d'enroulement et par lien cinématique, de l'arbre.

Dans l'état de l'art, différentes solutions pour le comptage existent, celles-ci se répartissant principalement entre des dispositifs de comptage (ou cages) électroniques ou mécaniques.

Les cages mécaniques sont utilisées couramment. Un mouvement de l'écran est transcrit mécaniquement par la cage dans un sens ou dans l'autre. Le réglage des positions de fin de course nécessite généralement un accès à l'actionneur. Les cages électroniques sont également largement présentes sur le marché. La position courante est repérée dans une mémoire électronique non volatile, ce qui permet de conserver l'information même en cas de coupure de courant. Le réglage d'une cage électronique peut être exécuté à distance, ce qui présente évidemment de nombreux avantages, les actionneurs n'étant pas aisément accessibles une fois montés sur site.

En cas de coupure de courant, le système dit de commande manuelle de secours permet de manoeuvrer manuellement l'écran normalement déplacé à l'aide de l'actionneur. Le mouvement est alors tel que l'ensemble du boîtier tubulaire de l'actionneur tourne vis à vis de la tête sous l'action de la commande de secours. Ainsi, ce n'est plus la roue sur l'arbre qui entraîne le tube d'enroulement en rotation, mais l'ensemble du boîtier tubulaire de l'actionneur.

Le brevet EP 0 229 681 décrit notamment un actionneur à commande de secours et à cage mécanique. Le même dispositif de comptage, mesurant la rotation du tube d'enroulement, est utilisé lorsque l'actionneur est alimenté et hors alimentation.

Les actionneurs à cage électronique en revanche posent des problèmes particuliers tels que décrits dans la demande de brevet IT MI 2002001549. En effet, la plupart des cages électroniques actuelles ne permettent pas de détecter un mouvement du boîtier tubulaire de l'actionneur hors alimentation. Sous l'action du système de commande de secours, l'écran est déplacé sans que le système de comptage électronique ne change la valeur de la position courante. Quel que soit le dispositif de comptage électronique utilisé (comptage effectué directement sur l'arbre de sortie ou détection de la rotation du tube d'enroulement), les capteurs ou l'électronique de ce dispositif de comptage n'étant pas alimentés, ils ne détectent pas la rotation.

Comme l'écran n'est généralement pas exactement remis dans sa position de départ, il en résulte un écart entre la position réelle de l'écran et la position relevée par la cage électronique, autrement dit l'installation est déréglée.

Une pratique simple consiste à détecter chaque interruption de courant et à recaler le système vers une butée (s'il en existe une) à chaque fois. Ceci a de nombreux inconvénients. Chaque micro-coupure de courant peut être à l'origine de ce recalage. Ce dernier est mal compris par l'utilisateur qui voit son installation avoir un comportement erratique alors qu'il donne un simple ordre de montée ou de descente.

Une autre solution, décrite dans la demande de brevet IT MI 2002001549 citée ci-dessus, consiste à ajouter, à un premier système de comptage des rotations de l'arbre, un second système de détection de la rotation de l'ensemble du boîtier tubulaire vis à vis de la tête. Ceci va permettre de réaliser le comptage lors d'une manoeuvre de secours manuelle ou plus simplement de détecter un mouvement. Le second système de détection est alimenté par un moyen de stockage d'énergie (type supercapacité) rechargé lorsque l'actionneur est de nouveau sous tension. L'installation pourra alors se recaler dans les seuls cas où une manoeuvre a eu lieu.

Cependant, cette solution nécessite la mise en oeuvre de nouveaux moyens de comptage outre les moyens existants, ce qui renchérit encore les dispositifs à manoeuvre de secours.

Par ailleurs, les principales solutions de comptage électronique utilisent des capteurs de position à sondes à effet Hall détectant le passage d'aimants lors de la rotation du tube d'enroulement. Alternativement, des dispositifs de comptage peuvent utiliser des capteurs optiques. Ces capteurs de position ont une consommation relativement élevée. Il est donc connu, pour économiser l'énergie de fonctionnement de l'actionneur, d'alimenter ces capteurs de manière saccadée, à une fréquence d'usage. Cette fréquence d'usage permet d'alimenter les capteurs pendant un temps de lecture et de les laisser non alimentés lorsqu'ils ne sont pas susceptibles de délivrer une information, c'est-à-dire lorsqu'ils ne rencontrent pas les aimants en regard.

Cependant, ces solutions ne sont actuellement valables que lorsque l'actionneur est alimenté par une source externe disponible en quantité importante.

On connaît aussi du document EP 0 479 525 un dispositif électromagnétique de détermination de la position angulaire d'un élément tournant. Il comprend une bobine d'excitation solidaire de l'élément tournant et alimentée par un circuit électrique et deux bobines de détection reliées à des moyens d'analyse. Dans un premier mode de fonctionnement, la bobine d'excitation est alimentée par un signal sinusoïdal et, dans un deuxième mode de fonctionnement, par un signal d'impulsions pour réaliser des économies d'énergie. Ces modes de fonctionnement ne sont ni liés à l'utilisation d'une commande manuelle, ni à la présence ou non de l'alimentation.

Le document US-A-5 038 272 décrit un dispositif de poursuite et d'enregistrement de la position atteinte par une pièce en mouvement, en particulier pour commande d'un robot industriel, grâce à un résolveur. Le dispositif comporte une source d'énergie de secours utilisée en cas de panne de l'alimentation principale pour mémoriser la position atteinte par la pièce et le résolveur a deux fréquences de fonctionnement, une fréquence normale et une fréquence réduite, selon la vitesse de déplacement de la pièce ou la présence de l'alimentation

Le but de l'invention est de fournir un procédé de fonctionnement d'un actionneur obviant aux inconvénients cités précédemment et améliorant les procédés de fonctionnement connus de l'art antérieur. En particulier, le but de l'invention est de proposer une solution alternative aux problèmes de détection de mouvement par une cage électronique dans le cas d'une manoeuvre de secours actionnée hors alimentation, plus simple à mettre enoeuvre et moins coûteuse que les solutions de l'état de l'art.

Le procédé selon l'invention est défini par la revendication 1.

Différents modes d'exécution du procédé sont définis par les revendications dépendantes 2 à 11.

Selon l'invention, l'actionneur électromécanique est défini par la revendication 12.

Le dessin annexé représente, à titre d'exemple, un mode d'exécution d'un procédé de fonctionnement selon l'invention.

La figure 1 est un schéma d'un mode de réalisation d'un actionneur selon l'invention permettant l'exécution d'un tel procédé.

La figure 2 est un schéma d'un mode de réalisation d'une unité électronique de commande d'un tel actionneur.

Les figures 3a, 3b et 4 sont des ordinogrammes de principe d'un mode d'exécution d'un procédé de fonctionnement selon l'invention.

L'invention est basée sur le principe d'économie d'énergie en mode dit de veille, c'est-à-dire lorsque l'actionneur se trouve hors alimentation. Elle est également basée sur les rapports de réduction importants qui existent entre l'entrée et la sortie du système de commande de secours et qui ont pour conséquence que lorsque le tube d'enroulement est entraîné par un système manuel de sécurité, sa vitesse de rotation est notablement inférieure à celle qu'il aurait s'il était entraîné par l'actionneur. Ainsi, le dispositif de comptage peut être activé de manière à consommer notablement moins d'énergie. Par exemple, il peut être alimenté selon un rapport cyclique notablement plus faible.

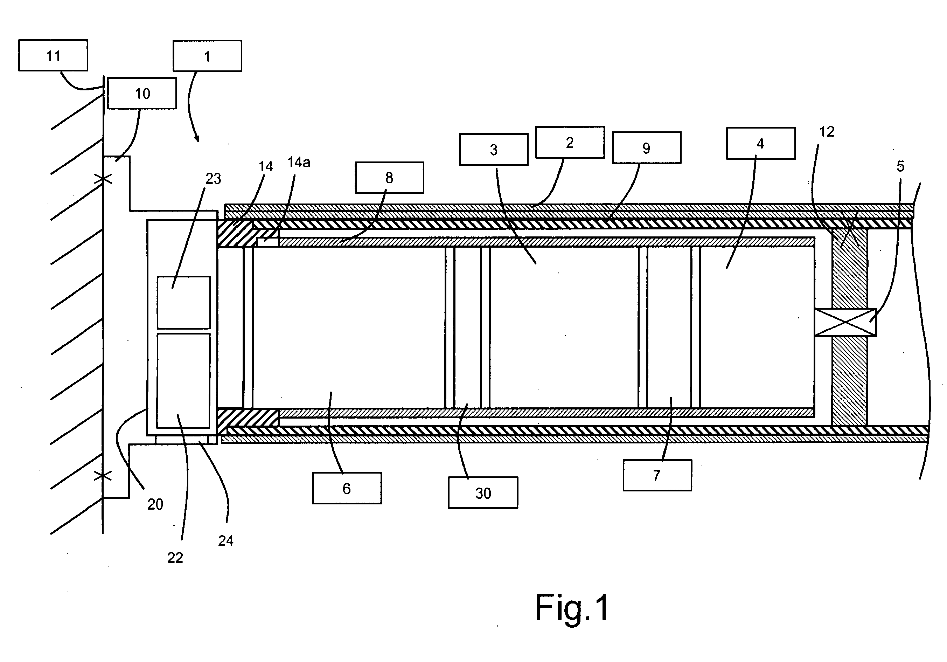

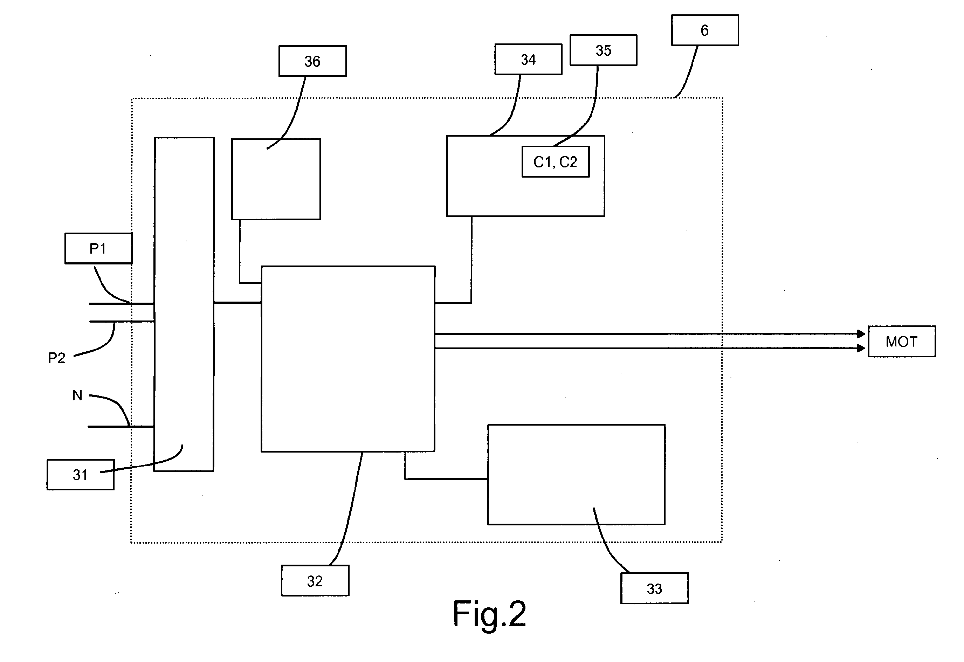

Les figures 1 et 2 représentent schématiquement un actionneur électromécanique 1 destiné à la motorisation du mouvement d'écran 2 ou d'ouvrants, tels que des fenêtres, des volets, des stores ou des écrans de projection. Il comprend un moteur 3 et un réducteur 4 placé sur un arbre de sortie 5 de l'actionneur, ainsi qu'une unité électronique de commande 6 permettant de piloter le moteur 3 dans un sens de rotation ou l'autre. Entre le moteur 3 et le réducteur 4 s'intercale un frein 7. Ces différents éléments sont placés dans un boîtier ou carter 8 qui constitue l'enveloppe de l'actionneur. Ce carter 8 est cylindrique pour un actionneur tubulaire destiné à être placé dans un tube d'enroulement 9 autour duquel s'enroule l'écran 2 manoeuvré. Les différents éléments de l'actionneur 1 sont alors placés dans le carter cylindrique 8, celui-ci étant lié à une de ses extrémités, à une tête 10 destinée à être montée sur une surface porteuse 11. A l'autre extrémité sort l'arbre 5 de sortie de l'actionneur.

La liaison entre l'actionneur et le tube d'enroulement est réalisée par une roue 12 montée sur l'arbre 5. Lors du montage, la roue 12 est fixée au tube d'enroulement 9, de sorte que lorsque l'arbre 5 est mis en mouvement, la roue 12 entraîne le tube 9 en rotation. Un autre élément tournant, appelé également couronne 14, est placé du côté de la tête 10 pour former un palier entre l'actionneur tubulaire 1 et le tube d'enroulement 9. La couronne 14 est fixée au tube d'enroulement 9 et tourne vis à vis de la tête 10 de l'actionneur.

L'actionneur comprend également un système de commande de secours 20, formant la liaison entre la tête 10 et le carter 8 de l'actionneur 1 et muni d'un mécanisme de transmission unidirectionnel 22. Ce mécanisme comprend également un réducteur 23. Lorsqu'un utilisateur connecte une manivelle (non représentée) à l'entrée 24 de ce système 20 et fait tourner la manivelle, le mouvement est transmis vers l'actionneur 1 de sorte que l'ensemble du carter cylindrique 8 de l'actionneur 1 tourne vis à vis de la tête 10 et entraîne le tube d'enroulement 9 via la couronne 14. Le système de commande de secours ou de manoeuvre manuelle de l'écran permet la manoeuvre de l'écran, notamment lorsque l'actionneur n'est pas alimenté par le secteur.

L'actionneur est alimenté au moyen d'une source de courant, par exemple le secteur, au travers de deux lignes de phase P1, P2 et d'une ligne de neutre N. Au moins une partie de l'unité de commande 6 est donc généralement alimentée en permanence par le courant secteur et est capable d'alimenter le moteur 3 dans un sens ou dans l'autre selon la commande.

Pour être compatible avec le système de commande de secours 20, l'actionneur 1 comprend notamment des contacts tournants 30 pour l'alimentation du moteur 3 et éventuellement de l'unité de commande 6 quelle que soit la position angulaire du carter cylindrique 8 de l'actionneur 1 par la source externe de courant. En effet, le carter cylindrique 8 peut prendre n'importe quelle position angulaire vis à vis de la tête 10, du fait de la présence du système de commande manuelle de secours 20.

Lorsqu'elle est alimentée, au travers d'une unité d'alimentation électronique 31, l'unité électronique de commande 6 commande le fonctionnement du moteur 3 ou plus généralement de l'actionneur 1, c'est à dire permet d'alimenter le moteur 3 pour le faire tourner dans un sens ou dans l'autre en fonction d'une commande utilisateur reçue. Des moyens de gestion de l'arrêt du moteur permettent également l'arrêt du moteur lorsque l'écran 2 atteint une butée ou un élément formant un blocage à son déroulement sur le parcours de l'écran 2.

L'unité électronique de commande 6 comprend également un microcontrôleur 32 et des mémoires 33 non volatiles où peuvent être stockées des valeurs de position (position courante, position de fin de course) et des paramètres de fonctionnement. Elle comprend outre les moyens de gestion du sens de rotation et d'arrêt du moteur précédemment cités, un dispositif de comptage de position 34 déterminant la position courante de l'écran, c'est- à-dire un système de comptage déterminant la position linéaire de l'écran. Ainsi, lors d'un mouvement, le moteur 3 est stoppé lorsque cette position courante correspond à une position dite de fin de course. Le microcontrôleur comprend aussi des moyens logiciels pour régir le fonctionnement de l'unité électronique de commande et de l'actionneur, c'est-à-dire des moyens de mise en oeuvre des différentes étapes du procédé selon l'invention. Ces moyens logiciels comprennent par exemple des programmes informatiques.

Le dispositif de comptage 34 est tel qu'il détecte une rotation du tube d'enroulement 9 vis à vis de la tête 10. Ce dispositif de comptage comprend une première partie de capteurs 35, par exemple des capteurs à effet Hall, qui détectent les passages d'aimants (ou zones aimantées) disposés régulièrement sur un pignon (éléments non représentés) entraîné en rotation par la rotation du tube d'enroulement 9. Pour cela, la couronne 14 comporte une denture intérieure 14a qui vient en prise directement ou non avec le pignon faisant partie du dispositif de comptage 34. Lorsque le moteur 3 est alimenté, l'actionneur 1 entraîne la rotation du tube d'enroulement 9 qui est alors détectée par le dispositif de comptage 34.

Lorsque l'actionneur 1 est manoeuvré manuellement par le dispositif de commande de secours 20, l'ensemble du carter tubulaire 8 de l'actionneur 1 fait tourner le tube d'enroulement 9. Cependant, le dispositif de comptage 34 ne peut détecter ce mouvement que s'il est alimenté.

A cette fin, l'unité électronique de commande 6 comprend une réserve interne d'énergie 36 rechargeable lorsque l'actionneur est sous tension. En effet, lorsque l'actionneur n'est plus alimenté, suite par exemple à une panne de courant secteur, l'unité de commande 6 ne peut plus être alimentée par cette source externe. Elle est alors alimentée exclusivement par l'intermédiaire de cette réserve d'énergie 36. Son fonctionnement est alors modifié pour s'adapter au changement de source d'alimentation comme décrit ci-dessous.

L'unité électronique de commande 6, et donc l'actionneur, est capable de fonctionner suivant deux modes de fonctionnement : en mode normal, lorsqu'elle est alimentée par la source externe et en mode veille lorsqu'elle est alimentée par la réserve d'énergie 36. En mode veille, cette réserve d'énergie 36 a une capacité choisie, par exemple d'environ 24h, le microcontrôleur 32 ayant basculé dans un mode de très faible consommation. L'unité électronique de commande étant alimentée par la réserve d'énergie 36, le dispositif de comptage 34 utilisé en mode normal peut alors détecter la rotation du tube d'enroulement 9 en mode veille. Ainsi, le même dispositif de comptage 34 peut être utilisé pour la détection de position lors d'une manoeuvre motorisée et lors d'une manoeuvre manuelle. En mode normal, le dispositif de comptage est activé selon une première loi et, en mode de veille, le dispositif de comptage est activé selon une deuxième loi. Le basculement du mode normal au mode de veille peut être déclenché par l'activation du système de commande manuelle de secours ou par un défaut d'alimentation de l'actionneur par le secteur, comme une panne du secteur.

Le dispositif de comptage 34 est dimensionné pour le comptage rapide lors d'une manoeuvre motorisée. Les capteurs 35 sont alors alimentés à une fréquence d'usage et détectent tous les passages des aimants. Cette fréquence d'usage est basée sur des périodes de réveil ou d'alimentation des capteurs pendant un temps suffisant pour voir le passage d'un aimant si une rotation est mise enoeuvre à partir du moteur et avec un rapport cyclique adapté.

En revanche, en mode veille, il n'est pas nécessaire d'alimenter à la fréquence d'usage ces capteurs 35 dans la mesure où la fréquence de passage des aimants est considérablement réduite, due à la réduction dans le mécanisme de commande de secours 20.

Il faut en effet un nombre important de tours de manivelle de la commande de secours 20 pour réaliser un tour complet du tube d'enroulement 9. La vitesse de rotation de l'ensemble tube d'enroulement 9 et actionneur 1, lors d'une manoeuvre de secours est donc très limitée par rapport à la vitesse que peut atteindre le tube d'enroulement 9 lorsqu'il est piloté par l'actionneur.

La solution consiste donc à dimensionner des temps et rapport cycliques de réveil ou d'alimentation des capteurs assez brefs pour économiser l'énergie de la réserve d'énergie et assez longues pour voir le passage d'un aimant si une rotation est mise enoeuvre à partir du système de commande de secours. Ainsi, la fréquence d'activation des capteurs est réduite de manière à ce qu'elle reste suffisante pour le comptage de position ou la détection d'un mouvement de l'écran compte tenu d'un rapport de réduction entre un mouvement fourni par l'actionneur et un mouvement fourni par le dispositif de commande manuelle de secours.

Hors alimentation, le microcontrôleur et les capteurs sont donc alimentés brièvement et régulièrement : hors commande manuelle, ces réveils n'apportent qu'une information d'absence de mouvement mais ne puisent dans la réserve d'énergie qu'une quantité limitée de courant, de sorte que celle-ci puisse être disponible environ 24h. Lors d'une commande manuelle, les capteurs détectent lors des périodes d'alimentation le passage des aimants correspondant à la rotation de la couronne 14 et sont capables de détecter au moins approximativement la position de l'écran. La position courante peut alors être inscrite dans la mémoire 33 correspondante. Un indicateur IND peut également être activé pour signaler l'utilisation du système de commande de secours 20, cette utilisation étant repérée par le même système de comptage 34 qu'en mode normal.

En pratique, il est possible de considérer que seule la détection de l'utilisation de la commande de secours est nécessaire. Un recalage du comptage ensuite sur une butée permettra de s'assurer de l'adéquation entre la position courante mise en mémoire et la position réelle de l'écran. Une fréquence d'activation des capteurs très réduite par rapport à la fréquence d'usage est alors suffisante si on ne souhaite que détecter une manoeuvre, sans alors réaliser un comptage.

Un recalage permet également d'utiliser un système de comptage moins précis que dans le fonctionnement normal. On peut également accepter de perdre quelques positions au démarrage, notamment si la vitesse de rotation est trop rapide pour être détectée par les capteurs fonctionnant en mode veille. Ceci est vrai en particulier si aucun recalage n'est possible (absence de butée franche pour l'écran par exemple).

Ainsi, l'actionneur fonctionne selon un mode de veille dès qu'il ne reçoit plus d'énergie du réseau, c'est-à-dire qu'il active le dispositif de comptage électronique selon une loi spécifique. Néanmoins, l'actionneur peut aussi activer le dispositif de comptage électronique selon cette loi spécifique dès qu'une activation de la commande de secours est détectée et indépendamment de l'énergie reçue du réseau.

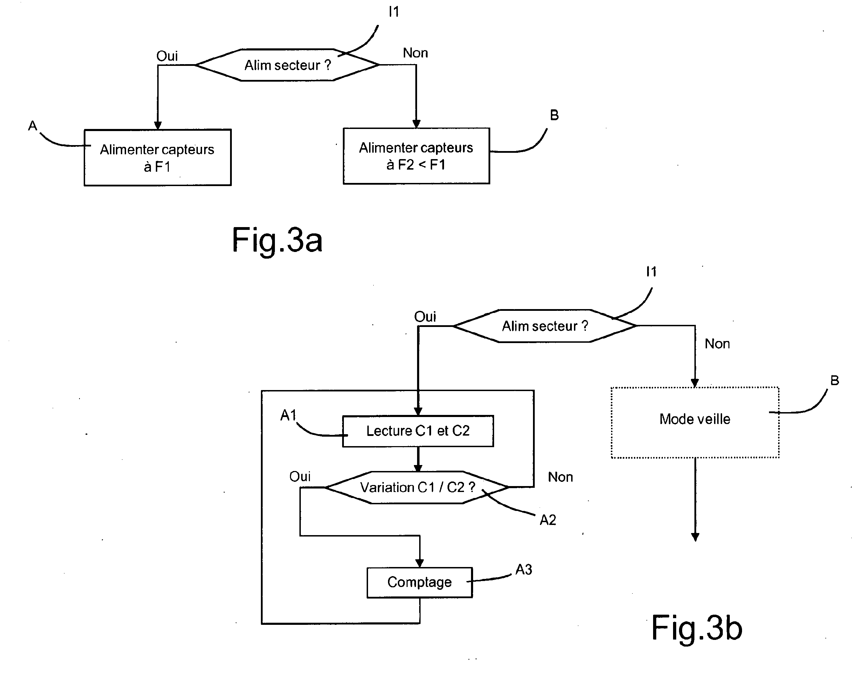

Les figures 3a et 3b représentent les fonctionnements en mode normal et en mode veille tels qu'expliqués ci-dessus.

Si une alimentation secteur est présente, l'unité électronique de commande passe en mode normal dans lequel le dispositif de comptage électronique est activé selon une première loi. Si cette alimentation secteur est absente, l'unité électronique de commande passe en mode veille dans lequel le dispositif de comptage électronique est activé selon une deuxième loi.

Par exemple, si une alimentation secteur est présente (étape I1), l'unité électronique de commande passe en mode normal dans lequel deux capteurs à effet Hall C1 et C2 sont alimentés à une première fréquence d'usage F1 (étape A). Et, si cette alimentation secteur est absente, l'unité électronique de commande passe en mode veille dans lequel un ou les deux capteurs à effet Hall C1 et C2 sont alimentés à une deuxième fréquence de comptage F2 en mode veille, inférieure à la première fréquence d'usage F1, en utilisant pour cela l'énergie fournie par la réserve d'énergie 36 (étape B).

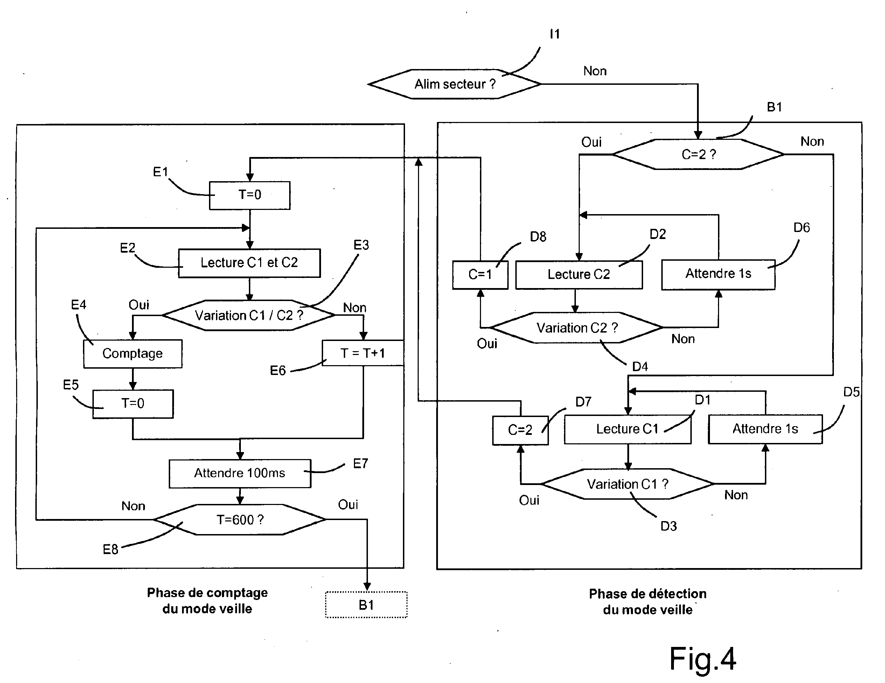

Les étapes A et B sont détaillées aux figures 3b et 4.

Au cours d'une étape A1, l'unité électronique lit les informations fournies par les capteurs. Si l'information provenant de ces capteurs indique une variation de position (étape A2), traduisant une rotation du tube d'enroulement au cours d'une étape A3, l'unité électronique de commande 6 procède au comptage de position. Chaque variation est alors traduite en termes de position de l'écran 2 et l'information correspondante mise en mémoire comme position courante.

Si aucune variation n'est détectée à l'étape A2, l'unité électronique de commande boucle vers l'étape I1.

A l'étape 11, si aucune alimentation secteur n'est détectée, le mode veille, détaillé en figure 4, est enclenché à l'étape B.

La figure 4 montre deux phases de fonctionnement à l'intérieur du mode veille. Une première phase, dite de détection, consiste à alimenter un seul des deux capteurs à une fréquence de détection F3 très réduite par rapport à la fréquence de comptage F2. Cette première phase reste en vigueur tant qu'aucune rotation n'est détectée, permettant une très faible consommation et donc une décharge très lente de la réserve d'énergie.

Un indicateur C permet de définir quel capteur C1 ou C2 est utilisé dans la phase de détection. La dernière valeur prise par l'indicateur ou une valeur par défaut est utilisée dans la première étape B1 de cette phase de détection.

Si C=2, l'étape D2 est engagée, au cours de laquelle le capteur C2 est lu. Si ce capteur informe d'une variation de position au cours d'une étape D4, l'indicateur C est basculé à 1 dans une étape D8 et la deuxième phase, dite de comptage, est engagée. Sinon, le microcontrôleur 32 attend une seconde (étape D6) avant d'alimenter de nouveau le capteur C2.

Alternativement, si C=1, les étapes D1, D3, D5, D7 correspondant aux étapes D2, D4, D6, D8 sont réalisées.

L'étape D8, respectivement, D7, permet d'alterner le capteur alimenté pour la phase de détection. Ceci a un intérêt dans le cas où l'actionneur est arrêté dans une position correspondant à un état instable d'un des capteurs. Cet état instable peut avoir pour conséquence qu'une information est fournie par le capteur alors qu'aucun mouvement n'est présent. Il est alors utile, une fois que l'absence de mouvement est confirmée dans la phase de comptage décrite ci-dessous, de venir lire l'information en provenance de l'autre capteur qui est lui nécessairement dans un état stable, les deux capteurs étant positionnés en quadrature.

Dans le cas où un mouvement du tube d'enroulement est détecté, l'unité électronique bascule en phase de comptage en mode veille.

A l'entrée dans la phase de comptage, un indicateur T de temps sans mouvement est mis à zéro au cours d'une étape E1.

Au cours d'une étape E2, les informations fournies par les deux capteurs C1 et C2 sont lues et si l'un ou les deux donnent une information de variation de position (étape E3), une étape E4 de comptage est engagée, correspondant à l'étape A3 dans le mode normal. L'indicateur T est ensuite remis à zéro au cours d'une étape E5.

Si aucune variation n'est détectée, l'indicateur T est incrémenté de 1 au cours d'une étape E6.

A l'issue de ces deux étapes E5 ou E6, l'étape E7 crée une temporisation de 100ms au cours de laquelle aucun des capteurs n'est alimenté. Ainsi, la fréquence de comptage F2 en mode veille est réduite par rapport à la fréquence d'usage F1.

Ce n'est qu'au bout de ces 100ms qu'une nouvelle lecture des capteurs C1 et C2 intervient (étape E2), ceci dans le cas où l'indicateur T n'a pas atteint une valeur limite de 600. Cette valeur limite de 600 correspond à un temps écoulé de 1 min sans mouvement détecté; il est estimé au cours d'une étape E8. Si tel est le cas, la phase de détection est de nouveau déclenchée, tant que l'alimentation secteur reste absente.

L'information fournie par les deux capteurs permet également de déterminer le sens de rotation.

Si on accepte de perdre quelques positions lors du démarrage de la manoeuvre manuelle (au cours de la phase de détection dans le mode veille), la fréquence et/ou le nombre de capteurs actifs est augmenté une fois la rotation détectée, pour la phase de comptage. Ainsi, le comptage lors du mouvement réel est précis tandis que la consommation en mode veille hors mouvement reste faible.

Le test de l'étape 11, à savoir si l'alimentation secteur est présente ou non n'est pas nécessairement systématique, l'unité électronique de commande peut présenter des moyens tels que l'apparition ou la disparition de cette alimentation fasse basculer automatiquement le fonctionnement dans un mode ou dans l'autre.

Les valeurs et calculs suivants permettent de donner une approximation des dimensionnements nécessaires pour le bon fonctionnement du système selon l'invention.

| | |
|---|---|
| Rapport de réduction manivelle /tour | 1/27 |
| Fréquence de manoeuvre de la manivelle | 40 à 120 tr/min |
| Angle de codage par tour pour comptage | 2,8° entre chaque position |
| Nombre de capteurs à effet Hall | 2 |
| Consommation par capteur à effet Hall | 7mA sous 3V |
| Temps de mesure pour un capteur à effet Hall | 100 $\mu$s 100 $\mu$s |
| Consommation d'un microcontrôleur en veille | 4$\mu$A sous 3V = 12 $\mu$W 4$\mu$A sous 3V = 12 $\mu$W |

Il faut approximativement 27 tours de manivelle pour un tour complet du tube d'enroulement. Un utilisateur "normal" tournera la manivelle à une vitesse approximative de 60 tours/min, un utilisateur plus sportif pourra aller jusqu'à 120 tours/min, vitesse qu'on considère comme une vitesse approximative maximale.

Cela signifie que l'actionneur et le tube d'enroulement peuvent tourner à 120/27 = 4.4 tr/min au maximum.

Un tour du tube d'enroulement est codé sur 127,5 positions distinctes (2,8° d'intervalle entre chaque position, sur 360°).

La fréquence maximale de détection est donc de 127,7 x 4,4 / 60 = 9,4 Hz, soit environ 1 détection toutes les 105 ms.

Pour garantir de compter toutes les positions, il suffit d'alimenter les deux capteurs à effet Hall toutes les 100ms pendant le temps le plus bref possible (100$\mu$s). Le système de comptage à 2 capteurs consomme alors :

$$2 \times 100.10^{-6} \times 7.10^{-3} \times 3 / 0,1 = 42\mu W$$

auxquels on ajoute la consommation du microcontrôleur, soit un total de $54\mu W$.

Pour fonctionner 24h, il faut donc :

$$24 \times 3600 \times 54.10^{-6} = 4,67J$$

Pour économiser l'énergie, on considère cependant que la moyenne de vitesse de la manivelle par l'utilisateur se situe plutôt à 60 tr/min. De plus, on peut accepter de perdre quelques positions, notamment au démarrage, entre les modes veille et normal.

Un réveil d'un seul capteur toutes les secondes entraîne une perte maximale de 6 positions (soit 16,8°), ce qui peut sembler acceptable.

Dans ces conditions, en phase de détection, la consommation est la suivante :

$$100.10^{-6} \times 7.10^{-3} \times 3 \times 1 = 2,1\mu W$$

auxquels on ajoute la consommation du microcontrôleur, soit un total de $14,1\mu W$.

Pour fonctionner 24h, il faut donc :

$$24 \times 3600 \times 14,1.10^{-6} = 1,21J$$

Pour alimenter un tel système, il faut une capacité capable de restituer E=1,3J.

Si on considère que la tension exploitable se situe entre $U_{max}=3,3$ et $U_{min}=2,7V$ avec

$$E=\tfrac{1}{2} Co (U_{max}^2 - U_{min}^2)$$

alors il faut une supercapacité Co d'environ 720mF.

En réveillant un seul capteur de manière fixe toutes les secondes, il est possible de se retrouver dans un cas de mouvement non détecté, par exemple, pour une fréquence fixe de rotation de la manivelle, le même pôle d'aimant se retrouvant à chaque tour devant le capteur. Celui-ci ne détecte alors pas le mouvement.

Ce risque peut être réduit, voire éliminé en faisant varier de manière aléatoire la fréquence, tout en respectant une plage de réveil proche de la seconde. Alternativement, on peut ajouter un réveil de capteur de manière choisie ou aléatoire au cours d'une période, séparé d'au moins une demi-seconde du dernier réveil capteur. Ainsi, on cherche à réaliser 3 mesures de capteur sur une période maximale d'une seconde et demie.

Cette dernière alternative change peu les valeurs des composants requis.

La consommation des capteurs devient :

$$100.10^{-6} \times 7.10^{-3} \times 3 \times (3 / 1,5) = 4,2\mu W$$

et la consommation globale $16,2 \ \mu W$

Pour fonctionner 24h, il faut donc $24 \times 3600 \times 16,2.10^{-6} = 1,4J$

La capacité nécessaire pour alimenter ce dispositif est alors proche de 800mF.

La fonction de réserve d'énergie peut également être réalisée par une petite pile Lithium ou une petite batterie rechargeable.

Après décharge complète de la réserve d'énergie, c'est à dire si l'actionneur reste hors alimentation pendant une période supérieure à 24h (ceci pouvant être détecté soit par comptage temporel soit par l'information de charge de la réserve d'énergie elle-même), un recalage systématique sera effectué.

D'autres stratégies sur la fréquence de scrutation des positions peuvent être envisagées, que ce soit dans la phase de détection ou de comptage.

En particulier, la fréquence de détection peut dépendre de l'énergie stockée dans la réserve d'énergie. La précision de comptage pourra ainsi rester fiable si les coupures d'alimentations sont peu fréquentes et de durée limitée, c'est à dire si la réserve d'énergie peut régulièrement être rechargée.

Ainsi, dans les premiers temps suivant une coupure de courant, la fréquence de détection peut être plus importante pour conserver une précision à peu près équivalente à la précision de comptage sous tension secteur. Par la suite, si la coupure de courant se prolonge, la fréquence de détection est diminuée. La variation de fréquence peut être proportionnelle à l'énergie stockée ou diminuer par paliers.

Alternativement, la fréquence de scrutation peut s'adapter en fonction de la vitesse de rotation détectée. L'adaptation à la vitesse de rotation détectée permet d'alimenter les capteurs de manière synchronisée et donc de réduire la consommation ainsi que de réduire le risque de non-détection d'une position.

Un recalage systématique ne sera donc pas forcément nécessaire, dans la mesure où les solutions de comptage en mode veille sont précises. Un recalage toutes les n situations de manoeuvre manuelle détectées hors alimentation peut alors être suffisant. De préférence, n prend n'importe quelle valeur entière comprise entre 5 et 20.

Une perte moyenne de positions peut être prise en compte une fois qu'un mouvement manuel est détecté ainsi que son sens, pour affiner la valeur de comptage lors de ce mouvement manuel.

La réduction de fréquence de détection peut être comprise par la réduction de la fréquence d'alimentation des capteurs, la réduction du temps d'alimentation de ces capteurs et/ou la réduction du nombre de capteurs alimentés en mode veille. D'autres modes de réalisation parvenant au même effet, à savoir une réduction de la consommation tout en maintenant une détection de mouvement manuel par le système de commande de secours seront également compris dans cette formulation.

## Revendications

1. Procédé de fonctionnement d'un actionneur électromécanique (1) pour la manoeuvre motorisée d'un écran, l'actionneur étant destiné à être alimenté par le secteur et comprenant un système de commande manuelle de secours (20) pour la manoeuvre manuelle de l'écran lorsque l'actionneur n'est pas alimenté par le secteur, et une unité électronique de commande (6) munie d'une réserve d'énergie rechargeable (36) et d'un dispositif (34) de comptage électronique pour déterminer la position de l'écran à partir des informations fournies par ce dispositif, **caractérisé en ce qu'**il comprend les deux modes suivants :

   - un premier mode de fonctionnement dit normal dans lequel l'actionneur est alimenté par le secteur et l'unité électronique de commande active, selon une première loi, le dispositif de comptage électronique,
   - un deuxième mode de fonctionnement dit de veille dans lequel l'actionneur n'est pas alimenté par le secteur, l'unité électronique de commande est alimentée par la réserve d'énergie et active, selon une deuxième loi, le dispositif de comptage électronique,

   le procédé comprenant un recalage du comptage sur une butée permettant de s'assurer de l'adéquation entre la position courante mise en mémoire et la position réelle de l'écran.

2. Procédé de fonctionnement selon la revendication 1, **caractérisé en ce que** le dispositif de comptage électronique consomme moins d'énergie lorsqu'il est activé selon la deuxième loi que lorsqu'il est activé selon la première loi.

3. Procédé de fonctionnement selon l'une des revendications précédentes, **caractérisé en ce que** le dispositif de comptage électronique présente une fréquence d'activation supérieure lorsqu'il activé selon la première loi que lorsqu'il est activé selon la deuxième loi.

4. Procédé de fonctionnement selon l'une des revendications précédentes, **caractérisé en ce que**, dans le mode de veille, les informations fournies par le dispositif de comptage électronique servent à détecter un mouvement réalisé à partir du système de commande manuelle de secours.

5. Procédé de fonctionnement selon l'une des revendications précédentes, **caractérisé en ce que** la deuxième loi est modulable en fonction de la détection d'un mouvement appliqué par le système de commande manuelle de secours.

**6.** Procédé de fonctionnement selon la revendication précédente, **caractérisé en ce qu'**une fois un mouvement détecté, la deuxième loi est modulée de manière à augmenter la fréquence d'activation du dispositif de comptage électronique.

**7.** Procédé de fonctionnement selon l'une des revendications précédentes, **caractérisé en ce qu'**en mode veille, une partie seulement du dispositif de comptage électronique est activée.

**8.** Procédé de fonctionnement selon l'une des revendications précédentes, **caractérisé en ce que** la deuxième loi est modulable en fonction de la charge de la réserve d'énergie.

**9.** Procédé de fonctionnement selon l'une des revendications précédentes, **caractérisé en ce que** la deuxième loi est modulable en fonction de la détection de la vitesse d'un mouvement fourni par le système de commande manuelle de secours.

**10.** Procédé de fonctionnement selon l'une des revendications précédentes, **caractérisé en ce qu'**une étape de recalage du comptage de position est mise en oeuvre toutes les n détections d'une manoeuvre par le système de commande manuelle de secours, n étant un entier supérieur ou égal à 1 et de préférence supérieur à 4.

**11.** Procédé de fonctionnement selon l'une des revendications précédentes, **caractérisé en ce que** le dispositif de comptage électronique détecte la rotation d'un tube d'enroulement (9) dans lequel est placé l'actionneur vis à vis d'un support fixe (10).

**12.** Actionneur électromécanique (1) pour la manoeuvre motorisée d'un écran, l'actionneur étant destiné à être alimenté par le secteur et comprenant un système de commande manuelle de secours (20) pour la manoeuvre manuelle de l'écran lorsque l'actionneur n'est pas alimenté par le secteur et une unité électronique de commande (6) munie d'une réserve d'énergie rechargeable (36) et d'un dispositif (34) de comptage électronique pour déterminer la position de l'écran à partir des informations fournies par ce dispositif, **caractérisé en ce que** l'actionneur comprend des moyens matériels (31, 32, 33) et logiciels de mise en oeuvre du procédé selon l'une des revendications précédentes.

**Patentansprüche**

**1.** Betriebsverfahren eines elektromechanischen Aktuators (1) für den motorisierten Antrieb einer Abtrennung, wobei der Aktuator dazu bestimmt ist, durch das Stromnetz versorgt zu sein und ein manuelles Hilfssteuerungssystem (20) für den manuellen Antrieb der Abtrennung umfasst, wenn der Aktuator nicht vom Stromnetz versorgt wird, und eine elektronische Steuereinheit (6), die mit einer aufladbaren Energiereserve (36) und einer elektronischen Zählvorrichtung (34) ausgestattet ist, um die Position der Abtrennung ausgehend von Informationen, die von dieser Vorrichtung geliefert werden, zu bestimmen, **dadurch gekennzeichnet, dass** es die folgenden zwei Modi umfasst:

- einen ersten normalen Betriebsmodus, in dem der Aktuator vom Stromnetz versorgt wird und die elektronische Steuerungsvorrichtung gemäß einem ersten Gesetz die elektronische Zählvorrichtung aktiviert,
- einen zweiten Bereitschafts-Betriebsmodus, in dem der Aktuator nicht vom Stromnetz versorgt wird, die elektronische Steuerungsvorrichtung von der Energiereserve versorgt wird und gemäß einem zweiten Gesetz die elektronische Zählvorrichtung aktiviert,

wobei das Verfahren eine Neuabstimmung der Zählung auf einem Anschlag umfasst, die erlaubt, die Entsprechung zwischen der laufenden Position, die gespeichert ist, und der tatsächlichen Position der Abtrennung zu überprüfen.

**2.** Betriebsverfahren nach Anspruch 1, **dadurch gekennzeichnet, dass** die elektronische Zählvorrichtung weniger Energie verbraucht, wenn sie nach dem zweiten Gesetz aktiviert ist als wenn sie nach dem ersten Gesetz aktiviert ist.

**3.** Betriebsverfahren nach einem der vorangehenden Ansprüche, **dadurch gekennzeichnet, dass** die elektronische Zählvorrichtung eine Aktivierungsfrequenz aufweist, die höher ist, wenn sie nach dem ersten Gesetz aktiviert ist als wenn sie nach dem zweiten Gesetz aktiviert ist.

**4.** Betriebsverfahren nach einem der vorangehenden Ansprüche, **dadurch gekennzeichnet, dass** die im Bereitschaftsmodus von der elektronischen Zählvorrichtung gelieferten Informationen dazu dienen, eine ausgehend vom manuellen Hilfssteuerungssystem durchgeführte Bewegung festzustellen.

5. Betriebsverfahren nach einem der vorangehenden Ansprüche, **dadurch gekennzeichnet, dass** das zweite Gesetz in Abhängigkeit von der Detektion einer Bewegung, die von der manuellen Hilfssteuerung angewendet wird, modulierbar ist.

6. Betriebsverfahren nach vorangehendem Anspruch, **dadurch gekennzeichnet, dass**, sobald eine Bewegung festgestellt ist, das zweite Gesetz derart moduliert wird, dass die Aktivierungsfrequenz der elektronischen Zählvorrichtung erhöht wird.

7. Betriebsverfahren nach einem der vorangehenden Ansprüche, **dadurch gekennzeichnet, dass** im Bereitschaftsmodus nur ein Teil der elektronischen Zählvorrichtung aktiviert ist.

8. Betriebsverfahren nach einem der vorangehenden Ansprüche, **dadurch gekennzeichnet, dass** das zweite Gesetz in Abhängigkeit von der Ladung der Energiereserve modulierbar ist.

9. Betriebsverfahren nach einem der vorangehenden Ansprüche, **dadurch gekennzeichnet, dass** das zweite Gesetz in Abhängigkeit von der Detektion der Geschwindigkeit einer Bewegung modulierbar ist, die von der manuellen Hilfssteuerung bereitgestellt wird.

10. Betriebsverfahren nach einem der vorangehenden Ansprüche, **dadurch gekennzeichnet, dass** alle n Detektionen eines Antriebs durch das manuelle Hilfssteuerungssystem ein Schritt der Neuabstimmung der Positionszählung durchgeführt wird, wobei n eine ganze Zahl größer oder gleich 1 und vorzugsweise größer als 4 ist.

11. Betriebsverfahren nach einem der vorangehenden Ansprüche, **dadurch gekennzeichnet, dass** die elektronische Zählvorrichtung die Rotation des Aufrollrohrs (9), in dem der Aktuator platziert ist, gegenüber einem starren Halter (10) feststellt.

12. Elektromechanischer Aktuator (1) für den motorisierten Antrieb einer Abtrennung, wobei der Aktuator dazu bestimmt ist, durch das Stromnetz versorgt zu sein und ein manuelles Hilfssteuerungssystem (20) für den manuellen Antrieb der Abtrennung umfasst, wenn der Aktuator nicht vom Stromnetz versorgt wird, und eine elektronische Steuereinheit (6), die mit einer aufladbaren Energiereserve (36) und einer elektronischen Zählvorrichtung (34) ausgestattet ist, um die Position der Abtrennung ausgehend von Informationen, die von dieser Vorrichtung geliefert werden, zu bestimmen, **dadurch gekennzeichnet, dass** der Aktuator Hard- (31, 32, 33) und Softwaremittel zur Umsetzung des Verfahrens nach einem der vorangehenden Ansprüche umfasst.

**Claims**

1. A method for operating an electromechanical actuator (1) for a motorised screen drive, the actuator being designed to be supplied by the power grid and comprising a manual backup control system (20) for manual operation of the screen when the actuator is not supplied by the power grid, and an electronic control unit (6) provided with a rechargeable energy reserve unit (36) and an electronic position counting device (34) to determine the position of the screen from the information provided by this device, **characterised in that** it comprises the following two operation modes :

   - a first so called normal operation mode wherein the actuator is supplied by the power grid and the electronic control unit activates, according to a first rule, the electronic counting device,
   - a second so called standby operation mode wherein the actuator is not supplied by the power grid, the electronic control unit is supplied by the energy reserve unit and activates, according to a second rule, the electronic counting device,

   the method comprising a resetting of the count on an end stop to ensure correspondence between the position currently stored in memory and the actual position of the screen.

2. A method of operation according to Claim 1, **characterised in that** the electronic counting device consumes less energy when it is activated according to the second rule than when it is activated according to the first rule.

3. A method of operation according to any one of the preceding claims, **characterised in that** the electronic counting device has a higher frequency of activation when it is activated according to the first rule than when it is activated according to the second rule.

4. A method of operation according to any one of the preceding claims, **characterised in that** in the standby mode, the information provided by the electronic counting device is used to detect a movement executed from the manual backup control system.

5. A method of operation according to any one of the preceding claims, **characterised in that** the second rule may be adjustable depending upon the detection of a movement applied by the manual backup control system.

6. A method of operation according to the preceding claim, **characterised in that** when a movement is detected, the second rule is modulated so as to increase the frequency of activation of the electronic counting device.

7. A method of operation according to any one of the preceding claims, **characterised in that** in the standby mode, only a part of the electronic counting device is activated.

8. A method of operation according to any one of the preceding claims, **characterised in that** the second rule may be adjustable depending upon the load of the energy reserve.

9. A method of operation according to any one of the preceding claims, **characterised in that** the second rule may be adjustable depending upon detection of the speed of the movement supplied by the manual backup control system.

10. A method of operation according to any one of the preceding claims, **characterised in that** a step of resetting the position count is implemented every n detections of a movement by the manual backup control system, n being an integer greater than or equal to 1 and preferably greater than 4.

11. A method of operation according to any one of the preceding claims, **characterised in that** the electronic counting device detects the rotation of a winding tube (9) in which the actuator is disposed opposite a stationary support member (10).

12. An electromechanical actuator (1) for operating a motorised screen drive, the actuator being designed to be supplied by the power grid and comprising a manual backup control system (20) for manual operation of the screen when the actuator is not supplied by the power grid, and an electronic control unit (6) provided with a rechargeable energy reserve unit (36) and an electronic position counting device (34) to determine the position of the screen from the information provided by this device, **characterised in that** the actuator comprises hardware means (31, 32, 33) and software programmes for implementing the method according to any one of the preceding claims.

Fig.1

Fig.2

Fig.3a

Fig.3b

14

Fig.4

Phase de détection du mode veille

Phase de comptage du mode veille

## RÉFÉRENCES CITÉES DANS LA DESCRIPTION

**Documents brevets cités dans la description**

- EP 0229681 A
- IT MI2002001549
- EP 0479525 A
- US 5038272 A